# EUROPEAN PATENT APPLICATION

(11) **EP 3 594 770 A1**
(43) Date of publication of application: **15.01.2020**
(21) Application number: 19185141.9
(22) Date of filing: 09.07.2019
(51) Int. Cl.: G05D 1/02, G06N 20/20, B60W 30/14

(54) **DEEP REINFORCEMENT LEARNING FOR A GENERAL FRAMEWORK FOR MODEL-BASED LONGITUDINAL CONTROL**

(30) Priority: 09.07.2018 US 201862695618 P
(71) Applicant: Visteon Global Technologies, Inc., Van Buren Township, MI 48111-5711 (US)
(72) Inventor: PATHAK, Shashank, Offenbach am Main 63067 (DE); BAG, Suvam, Canton, MI 48178-4893 (US); NADKARNI, Vijay Jayant, San Jose, CA 95129 (US)
(74) Representative: Dummett Copp LLP

(57) **Abstract**

A system (100) for controlling a vehicle (10) includes a processor (104) configured to execute instructions stored on a non-transitory computer readable medium (106). The system also includes a sensor (112) coupled to the processor and configured to receive sensory input (202). The system also includes a controller (102) coupled to the processor and configured to control the vehicle. The processor is further configured to: create a synthetic image (204, 308) based on the sensory input; derive a deep reinforcement learning (RL) policy (206, 314) using the synthetic image, wherein the deep RL policy determines a longitudinal control for the vehicle (316); and instruct the controller to control the vehicle based on the deep RL policy (208, 316).

## Description

### BACKGROUND

Advanced Driver-Assistance Systems (ADAS) can be used to control functions of a vehicle, such as Adaptive Cruise Control (ACC), lane keeping, and traffic jam assistance. Software algorithms can be configured to such control functions. For example, the software algorithms can use input received from sensors on the vehicle to synthesize the environment surrounding the vehicle in real time. The software algorithms can provide output to a driver of the vehicle or it can specify how the ADAS should control functions of the vehicle.

### SUMMARY

This section provides a general summary of the present disclosure and is not a comprehensive disclosure of its full scope or all of its features, aspects, and objectives.

Disclosed herein is an example system for controlling a vehicle. The system can include a processor and a sensor coupled to the processor. The sensor can be configured to receive sensory input. The system can also include a controller coupled to the processor and configured to control the vehicle. The processor can be configured to execute instructions stored on a non-transitory computer readable medium. The processor can also be configured to create a synthetic image based on the sensory input and derive a deep reinforcement learning (RL) policy using the synthetic image. The processor can use the deep RL policy to determine a longitudinal control for the vehicle. The processor can also be configured to instruct the controller to control the vehicle based on the deep RL policy.

An aspect of the disclosed embodiments is a system for controlling a vehicle. The system includes a processor configured to execute instructions stored on a non-transitory computer readable medium. The system also includes a sensor coupled to the processor and configured to receive sensory input. The system also includes a controller coupled to the processor and configured to control the vehicle. The processor is further configured to: create a synthetic image based on the sensory input; derive a deep reinforcement learning (RL) policy using the synthetic image, wherein the deep RL policy determines a longitudinal control for the vehicle; and instruct the controller to control the vehicle based on the deep RL policy.

Another aspect of the disclosed embodiments is a method for controlling a vehicle. The method includes receiving a sensory input from at least one sensor of the vehicle. The method also includes creating a synthetic image based on the sensory input. The method also includes deriving a policy based on the synthetic image, wherein the deep RL policy indicates a longitudinal control for the vehicle. The method also includes selectively controlling the vehicle based on the longitudinal control indicated in by deep RL policy.

Another aspect of the disclosed embodiments is an apparatus for controlling a vehicle. The apparatus includes a processor in communication with a non-transitory computer readable medium that stores instructions that, when executed by the processor, cause the processor to: receive sensory input from at least one sensor of the vehicle; generate a synthetic image based on the sensory input; use an artificial neural network to derive a deep reinforcement learning (RL) policy based the synthetic image, wherein the deep RL policy indicates a longitudinal control for the vehicle; and selectively instruct a controller of the vehicle to control the vehicle based on the longitudinal control indicated in by deep RL policy.

Also disclosed herein is an example method for controlling a vehicle. The method can include receiving a sensory input and creating a synthetic image based on the sensory input. The method can further include deriving a policy based on the synthetic image and using the policy for a longitudinal control of the vehicle.

### BRIEF DESCRIPTION OF THE DRAWINGS

The disclosure is best understood from the following detailed description when read in conjunction with the accompanying drawings, given by way of example only. It is emphasized that, according to common practice, the various features of the drawings are not to-scale. On the contrary, the dimensions of the various features are arbitrarily expanded or reduced for clarity.
FIG. 1A generally illustrates a vehicle according to the principles of the present disclosure.
FIG. 1B generally illustrates a simplified block diagram depicting example components of a system according to the principles of the present disclosure.
FIG. 2 is a flow diagram illustrating an example process of the system according to the principles of the present disclosure.
FIG. 3 is a flow diagram illustrating an example deployment of the system according to the principles of the present disclosure.

### DETAILED DESCRIPTION

The following description is merely example in nature and is not intended to limit the disclosure in its application or uses. For purposes of clarity, the same reference numbers are used in the description and drawings to identify similar elements.

In the context of Advanced Driver-Assistance Systems (ADAS), the task of driving a vehicle on a lane can be sub-divided into lateral and longitudinal controls. Within longitudinal control, there are further categorizations such as Adaptive Cruise Control (ACC), lane keeping, and traffic jam assistant. The main reason to do these categorizations is to handle the complexity of longitudinal control via smaller modules; this works best for classical approaches where extensive models are built using a large amount of domain knowledge. However, the learning paradigms for these categorizations are often applied in piece-meal fashion, which lead to side effects.

This disclosure includes systems and methods of deep learning reinforcement learning (RL), or deep RL technology in the context of a generalized longitudinal control that can also involve steering a vehicle. The systems and methods can include a general representation and a powerful learning setup, wherein an algorithm can be configured to learn ADAS functionalities such as ACC, lane following, and lane change in a holistic fashion. Modern machine learning technologies can be configured to handle such complexities. New generation cars can be equipped with the suitable hardware (such as graphics processing unit (GPU) acceleration) for such algorithms. In other words, the processor 104 can use deep RL for a control system.

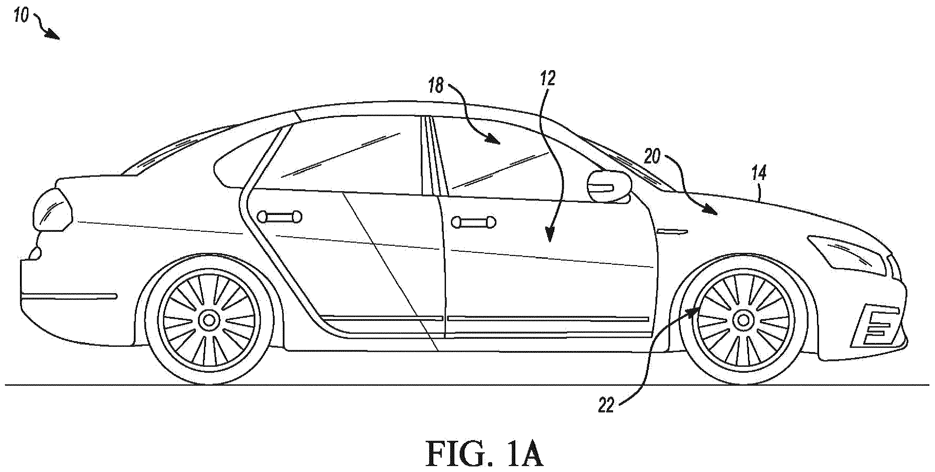

FIG. 1A generally illustrates a vehicle 10 according to the principles of the present disclosure. The vehicle 10 may include any suitable vehicle, such as a car, a truck, a sport utility vehicle, a mini-van, a crossover, any other passenger vehicle, any suitable commercial vehicle, or any other suitable vehicle. While the vehicle 10 is illustrated as a passenger vehicle having wheels and for use on roads, the principles of the present disclosure may apply to other vehicles, such as planes, boats, trains, drones, or other suitable vehicles.

The vehicle 10 includes a vehicle body 12 and a hood 14. A portion of the vehicle body 12 defines a passenger compartment 18. Another portion of the vehicle body 12 defines the engine compartment 20. The hood 14 may be moveably attached to a portion of the vehicle body 12, such that the hood 14 provides access to the engine compartment 20 when the hood 14 is in a first or open position and the hood 14 covers the engine compartment 20 when the hood 14 is in a second or closed position.

The passenger compartment 18 is disposed rearward of the engine compartment 20. The vehicle 10 may include any suitable propulsion system including an internal combustion engine, one or more electric motors (e.g., an electric vehicle), one or more fuel cells, a hybrid (e.g., a hybrid vehicle) propulsion system comprising a combination of an internal combustion engine, one or more electric motors, and/or any other suitable propulsion system.

In some embodiments, the vehicle 10 may include a petrol or gasoline fuel engine, such as a spark ignition engine. In some embodiments, the vehicle 10 may include a diesel fuel engine, such as a compression ignition engine. The engine compartment 20 houses and/or encloses at least some components of the propulsion system of the vehicle 10. Additionally, or alternatively, propulsion controls, such as an accelerator actuator (e.g., an accelerator pedal), a brake actuator (e.g., a brake pedal), a steering wheel, and other such components are disposed in the passenger compartment 18 of the vehicle 10. The propulsion controls may be actuated or controlled by a driver of the vehicle 10 and may be directly connected to corresponding components of the propulsion system, such as a throttle, a brake, a vehicle axle, a vehicle transmission, and the like, respectively. In some embodiments, the propulsion controls may communicate signals to a vehicle computer (e.g., drive by wire) which in turn may control the corresponding propulsion component of the propulsion system.

In some embodiments, the vehicle 10 includes a transmission in communication with a crankshaft via a flywheel or clutch or fluid coupling. In some embodiments, the transmission includes a manual transmission. In some embodiments, the transmission includes an automatic transmission. The vehicle 10 may include one or more pistons, in the case of an internal combustion engine or a hybrid vehicle, which cooperatively operate with the crankshaft to generate force, which is translated through the transmission to one or more axles, which turns wheels 22. When the vehicle 10 includes one or more electric motors, a vehicle battery, and/or fuel cell provides energy to the electric motors to turn the wheels 22. In cases where the vehicle 10 includes a vehicle battery to provide energy to the one or more electric motors, when the battery is depleted, the battery, via the vehicle 10, may be connected to an electric grid (e.g., using a wall socket) to recharge the battery cells. Additionally, or alternatively, the vehicle 10 may employ regenerative braking which uses the one or more electric motors of the vehicle 10 as a generator to convert kinetic energy lost due to decelerating back into stored energy in the battery.

The vehicle 10 may include automatic vehicle propulsion systems, such as a cruise control, an adaptive cruise control, automatic braking control, other automatic vehicle propulsion systems, or a combination thereof. The vehicle 10 may be an autonomous or semi-autonomous vehicle, or other suitable type of vehicle. The vehicle 10 may include additional or fewer features than those generally illustrated and/or disclosed herein.

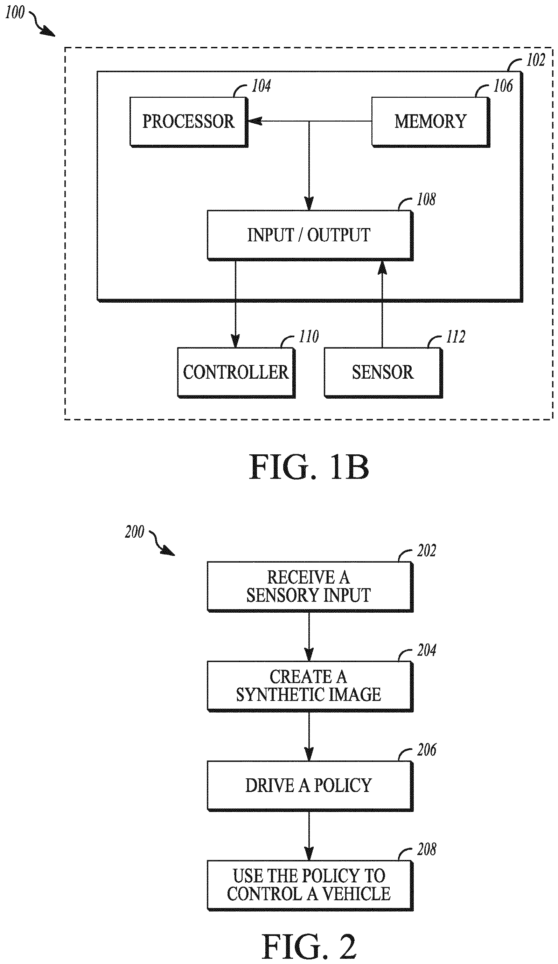

FIG. 1B is an illustrative block diagram depicting exemplary components of the system 100 in accordance with one aspect of the present disclosure. The system 100 may include additional and/or fewer components and is not limited to those illustrated in FIG. 1B. The system 100 includes a control unit 102. The control unit 102 includes various components such as at least one microprocessor or processor 104, a memory 106, and an input/output 108. The control unit 102 may process the data captured by the sensor 112 to identify the environment surrounding the system 100. The sensor 112 can capture sensory input, such as the real-time position and/or speed of the vehicle, as well as other information of the vehicle or another vehicle or object. The processor 104 can process the real-time information of the vehicle within that environment. The processor 104 can process data of the environment, like whether another vehicle is changing lanes and speed, which are captured by the sensor 112. The processor 104 can create a synthetic image based on the sensory input. The processor 104 can derive a reinforcement learning (RL) policy using the synthetic image. For example, the processor 104 can derive a deep RL policy for longitudinal control of the vehicle. The memory 106 stores data of the information. For example, the memory 106 can store the real-time information of the vehicle, the data of the environment, the synthetic image, the RL policy, and domain knowledge. The processor 104 can output information and/or instructions to the controller 110 to drive the control mechanism for the controller 110.

The processor 104 is a device that processes signals and performs general computing and arithmetic functions. The processor 104 may include multiple single and multicore processors, co-processors, and architectures. The memory 106 may include a variety of memory, such as volatile memory and non-volatile memory. The memory 106 may also include a disk, such as but not limited to a flash memory card, a memory stick, a magnetic disk drive, a solid-state disk drive, a CR-ROM, or a DVD ROM. The memory 106 may store a system that controls resources of a computing device and software that the processor 104 executes. The processor 104 and memory 106 are operatively coupled. The processor 104 performs processes by executing software instructions stored by the memory 106. The processes may include capturing data of the environment surrounding the vehicle. The processes may include capturing data of the real-time speed and position of the vehicle. The processes may also include deriving a policy to control the vehicle. The processes may also include deriving additional RL policy for the next deployment or activation of the controller 110, which improves the processes.

The processor 104 and the memory 106 communicate through the input/output 108. The input/output 108 is a part of the system 100 and communicates with the sensor 112 and the controller 110. The data captured by the sensor 112 is input to processor 104 for processing and outputting to the controller 110.

FIG. 2 illustrates an example process 200 of the system 100. Step 202 includes receiving a sensory input. For example, the sensory input can include vehicle information and environmental information. At step 204, the processor 104 creates a synthetic image. The processor 104 use the synthetic image to build a state space. The processor 104 can create the synthetic image using relevant features and general mapping from an actual 3D word to a 2D frame. The processor 104 can use any desirable sensory input and is not limited to sensory input that is continuous, differentiate, or even known. The processor 104 does not need to use actual camera images from the sensor 112. Rather, the processor 104 can utilize domain knowledge, such as the size of the vehicle. By utilizing domain knowledge instead of camera images, fewer resources are used during deployment of the system 100. At step 206, the processor 104 can derive a policy, such as a deep RL policy. The processor 104 can use the synthetic image to derive the policy. At step 208, the system 100 can use the policy to control the vehicle. For example, the processor 104 can use the RL policy to determine a longitudinal control for the vehicle. The processor 104 can instruct the controller 110 to control the vehicle based on the RL policy. The policy can be used to deploy the controller 110 for longitudinal control, such as ACC, lane keeping, traffic jam assistance, or any other desirable feature. The process 200 may include additional and/or fewer steps and is not limited to those illustrated in this disclosure.

Artificial Neural Networks (ANN), sometimes called 'neural networks' can be a non-linear function approximator. Each 'neuron' transforms a given input real number non-linearly to another one. Neurons can be arranged in 'layers' and an ANN may have more than one layer, in addition to input and output layers. When the number of layers are large, for example, three or more layers, the ANN can represent a very complex approximator. Such an ANN can be termed 'deep.' Some very deep networks can have more than 100 layers.

In RL, the system 100 can learn value functions, such as V(s) and Q(s,a), where V(s) denotes how good a state's' is with respect to an objective and Q(s,a) denotes how good an action 'a' is given a state 's.' When there are a small number of states 's' and actions 'a,' these functions can be represented in a tabular form. However, typically, the state space is large and approximators can be used to represent them. Unlike a set of weighted Gaussians, which are linear in terms of weights, deep ANN can be non-linear approximators used for a large state space. In one example, RL can be deep RL and the neural network represents a general approach where arbitrary input and output can be defined. However, the neural network-based RL can suffer from lack of convergence proofs. The algorithm may diverge and produce arbitrarily bad policies (i.e., behavior that the system 100 can be configured to learn). Such bad policies can occur even more with deep RL. Some approaches with deep RL can be used to tackle this problem, such as Deep Double Q-Learning (DDQN), Advantage Actor-Critic (A3C), Trust Region Policy Optimization (TRPO), and proximal policy optimization (PPO) algorithms. These approaches can be used to stabilize the learning (such as by leaning the Q value using two networks instead of one) and ease the design of algorithm (such as simpler updates defined by PPO). When learning a suitable regression function (over Q values), these approaches can function comparably, that is, these methods can result in similar outcomes. Hence, the deep RL architecture can maintain all of these approaches based on the needs of the system 100 and choose the one that performs the best in a certain situation. The system 100 can choose a specific method. The method can then be applied to derive a policy that is eventually deployed, for example, in a vehicle.

The longitudinal control can be a more general and perhaps principled way to look at controlling a vehicle (e.g., the vehicle 10), such as for traditional ACC. However, the system 100 can consider other variables, such as vehicles in the adjacent lanes and their kinematics. Because of deep networks and extensive simulations, the system 100 can learn the complex dynamics associated with a smooth control in the longitudinal direction. For example, if a leading car is driving at some arbitrary but known speed with an arbitrary distance and in the same lane as an ego vehicle, the ego vehicle may have to cruise whenever possible in order to follow the leading car while keeping a safe distance. If the leading car vehicle travels from the ego vehicle's lane to another lane, then the ego vehicle can use this information to control the ego vehicle (i.e. the ego vehicle may not need to slow down even if the distance appears to be less than safe distance). Likewise, if a third vehicle in an adjacent lane travels into the ego vehicle's lane, the ego vehicle can use the information to control the ego vehicle for a smoother profile.

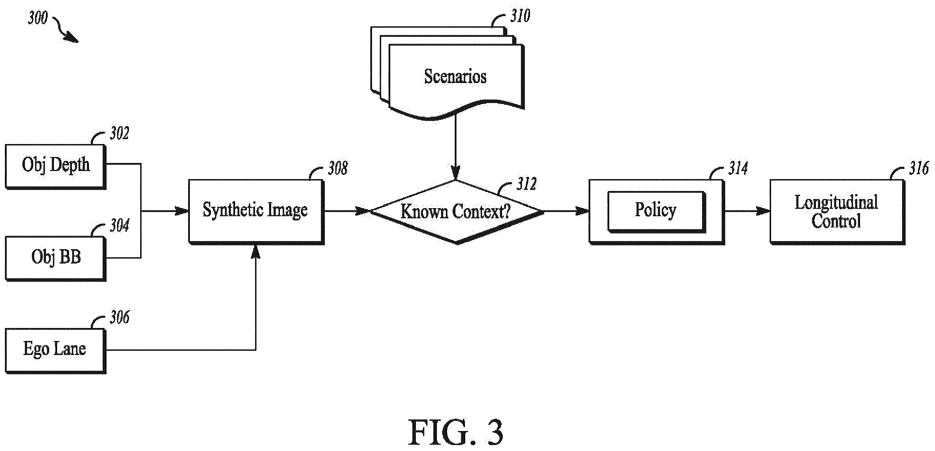

FIG. 3 is a flow chart 300 illustrating an example deployment of the system 100. The processor 104 can use deep RL for a control system, which is much more general than typical ACC. ACC may consider only the positions, such as velocities of a lead vehicle (i.e., a vehicle ahead of an ego vehicle), whereas deep RL can consider additional parameters and information. The processor 104 can be configured to use deep RL to consider an object depth 302, and object bounding box 304, and an ego lane 306 to create a synthetic image 308. The processor 104 can evaluate scenarios 310 with the synthetic image 308 at decision step 312 to determine if there is known context. The processor 104 can also use rewards and/or algorithms to determine if there is known context. If the context is known, then the processor 104 can derive a deep reinforcement learning (RL) policy 314 using the synthetic image. At step 316, the processor 104 can use the deep RL policy to determine a longitudinal control for the vehicle. The processor 104 can instruct the controller 110 to control the vehicle based on the deep RL policy. For example, deep RL policy may consider a vehicle in an adjacent lane and thereby can reason about a more general control policy such as to not brake the ego vehicle even though lead vehicle is slowing down because the lead vehicle is going to change to a slower lane to the right of the ego vehicle.

The deep RL can represent the overall 'relevant' scenarios 310. A 2D image, such as the synthetic image 308, can be used to represent the relevant scenarios 310. The 2D image may not include the actual image from vehicle sensors. The 2D image may include only the features that are determined to be relevant. Including only the relevant structures improves the scalability of the system 100 and methods. Once the synthetic image 308 is generated, appropriate rewards can be designed (such as having a penalty for being dangerously close or changing acceleration too often) so that a learner can devise an optimal policy. In order to further improve scalability, a ratio of separation versus desired separation and of ego speed versus the set speed can be used. In this example, the learner can save time by not having to learn these concepts.

The system 100 can consider extended state space (e.g., other lanes) and is not restricted to universally fixed parameters. The state base can be built as the synthetic image 308 to incorporate all of the information of a modem semi-autonomous vehicle. Building the synthetic image 308 may include careful but general mapping from an actual 3D world to a 2D frame involving only the relevant features. Unlike classical approaches, these information channels are not modeled and any sensory input can be used without it being continuous, differentiate, or even known. Deep learning methods can use the actual camera images because the system 100 does not require utilizing the domain knowledge, such as that a size of the vehicle is less relevant than its position. In one example, the system 100 is learning and can be enhanced because the learned model is small and fewer resources are consumed during the deployment of this module.

Once the state-space is framed as the synthetic image 308, the system 100 can model the learning problem as deep RL and use methods, such as PPO, to derive a suitable policy. In this example, the controller is holistic, efficient, and also intuitive and trust-worthy from a human driver's perspective and corresponding rewards of deep RL.

In some embodiments, a system for controlling a vehicle includes a processor configured to execute instructions stored on a non-transitory computer readable medium. The system also includes a sensor coupled to the processor and configured to receive sensory input. The system also includes a controller coupled to the processor and configured to control the vehicle. The processor is further configured to: create a synthetic image based on the sensory input; derive a deep reinforcement learning (RL) policy using the synthetic image, wherein the deep RL policy determines a longitudinal control for the vehicle; and instruct the controller to control the vehicle based on the deep RL policy.

In some embodiments, the sensory input includes at least a position of the vehicle. In some embodiments, the sensory input includes at least a speed of the vehicle. In some embodiments, the sensory input corresponds to another vehicle. In some embodiments, the sensory input corresponds to an object proximate the vehicle. In some embodiments, the processor is further configured to create the synthetic image using domain knowledge. In some embodiments, the processor is further configured to derive the deep RL policy using an artificial neural network.

In some embodiments, a method for controlling a vehicle includes receiving a sensory input from at least one sensor of the vehicle. The method also includes creating a synthetic image based on the sensory input. The method also includes deriving a policy based on the synthetic image, wherein the deep RL policy indicates a longitudinal control for the vehicle. The method also includes selectively controlling the vehicle based on the longitudinal control indicated in by deep RL policy.

In some embodiments, the sensory input includes at least a position of the vehicle. In some embodiments, the sensory input includes at least a speed of the vehicle. In some embodiments, the sensory input corresponds to another vehicle. In some embodiments, the sensory input corresponds to an object proximate the vehicle. In some embodiments, creating the synthetic image includes using domain knowledge. In some embodiments, deriving the deep RL policy includes using an artificial neural network.

In some embodiments, an apparatus for controlling a vehicle includes a processor in communication with a non-transitory computer readable medium that stores instructions that, when executed by the processor, cause the processor to: receive sensory input from at least one sensor of the vehicle; generate a synthetic image based on the sensory input; use an artificial neural network to derive a deep reinforcement learning (RL) policy based the synthetic image, wherein the deep RL policy indicates a longitudinal control for the vehicle; and selectively instruct a controller of the vehicle to control the vehicle based on the longitudinal control indicated in by deep RL policy.

In some embodiments, the instructions, when executed by the processor, further cause the processor to generate the synthetic image using domain knowledge. In some embodiments, the controller controls the vehicle based on the longitudinal control indicated in by deep RL policy by performing automatic cruise control functions. In some embodiments, the controller controls the vehicle based on the longitudinal control indicated in by deep RL policy by performing lane keeping functions. In some embodiments, the sensory input corresponds to another vehicle. In some embodiments, the sensory input corresponds to an object proximate the vehicle.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

The word "example" is used herein to mean serving as an example, instance, or illustration. Any aspect or design described herein as "example" is not necessarily to be construed as preferred or advantageous over other aspects or designs. Rather, use of the word "example" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an implementation" or "one implementation" throughout is not intended to mean the same embodiment or implementation unless described as such.

Implementations the systems, algorithms, methods, instructions, etc., described herein can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors, or any other suitable circuit. In the claims, the term "processor" should be understood as encompassing any of the foregoing hardware, either singly or in combination. The terms "signal" and "data" are used interchangeably.

As used herein, the term module can include a packaged functional hardware unit designed for use with other components, a set of instructions executable by a controller (e.g., a processor executing software or firmware), processing circuitry configured to perform a particular function, and a self-contained hardware or software component that interfaces with a larger system. For example, a module can include an application specific integrated circuit (ASIC), a Field Programmable Gate Array (FPGA), a circuit, digital logic circuit, an analog circuit, a combination of discrete circuits, gates, and other types of hardware or combination thereof. In other embodiments, a module can include memory that stores instructions executable by a controller to implement a feature of the module.

Further, in one aspect, for example, systems described herein can be implemented using a general-purpose computer or general-purpose processor with a computer program that, when executed, carries out any of the respective methods, algorithms, and/or instructions described herein. In addition, or alternatively, for example, a special purpose computer/processor can be utilized which can contain other hardware for carrying out any of the methods, algorithms, or instructions described herein.

Further, all or a portion of implementations of the present disclosure can take the form of a computer program product accessible from, for example, a computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

The above-described embodiments, implementations, and aspects have been described in order to allow easy understanding of the present invention and do not limit the present invention. On the contrary, the invention is intended to cover various modifications and equivalent arrangements included within the scope of the appended claims, which scope is to be accorded the broadest interpretation to encompass all such modifications and equivalent structure as is permitted under the law.

## Claims

1. A system for controlling a vehicle, comprising:
a processor, the processor being configured to execute instructions stored on a non-transitory computer readable medium;
a sensor coupled to the processor and configured to receive sensory input; and
a controller coupled to the processor and configured to control the vehicle;
wherein the processor is further configured to:
create a synthetic image based on the sensory input;
derive a deep reinforcement learning (RL) policy using the synthetic image, wherein the deep RL policy determines a longitudinal control for the vehicle; and
instruct the controller to control the vehicle based on the deep RL policy.

2. The system of claim 1, wherein the sensory input includes at least a position of the vehicle.

3. The system of claim 1, wherein the sensory input includes at least a speed of the vehicle.

4. The system of claim 1, wherein the sensory input corresponds to another vehicle.

5. The system of claim 1, wherein the sensory input corresponds to an object proximate the vehicle.

6. The system of any preceding claim, wherein the processor is further configured to create the synthetic image using domain knowledge.

7. The system of any preceding claim, wherein the processor is further configured to derive the deep RL policy using an artificial neural network.

8. A method for controlling a vehicle, comprising:
receiving a sensory input from at least one sensor of the vehicle;
creating a synthetic image based on the sensory input;
deriving a policy based on the synthetic image, wherein the deep RL policy indicates a longitudinal control for the vehicle; and
selectively controlling the vehicle based on the longitudinal control indicated in by deep RL policy.

9. The method of claim 8, wherein the sensory input includes at least a position of the vehicle.

10. The method of claim 8, wherein the sensory input includes at least a speed of the vehicle.

11. The method of claim 8, wherein the sensory input corresponds to another vehicle.

12. The method of claim 8, wherein the sensory input corresponds to an object proximate the vehicle.

13. The method of any one of claims 8 to 12, wherein creating the synthetic image includes using domain knowledge.

14. The method of any one of claims 8 to 13, wherein deriving the deep RL policy includes using an artificial neural network.

15. An apparatus for controlling a vehicle, comprising:
a processor in communication with a non-transitory computer readable medium that stores instructions that, when executed by the processor, cause the processor to:
receive sensory input from at least one sensor of the vehicle;
generate a synthetic image based on the sensory input;
use an artificial neural network to derive a deep reinforcement learning (RL) policy based the synthetic image, wherein the deep RL policy indicates a longitudinal control for the vehicle; and
selectively instruct a controller of the vehicle to control the vehicle based on the longitudinal control indicated in by deep RL policy.
